# DEMANDE DE BREVET EUROPEEN

(11) **EP 3 503 076 A1**
(43) Date de publication de la demande: **26.06.2019**
(21) Numéro de dépôt: 18213502.0
(22) Date de dépôt: 18.12.2018
(51) Int. Cl.: G09B 9/04

(54) **SIMULATEUR DE PILOTAGE A FAIBLE ENCOMBREMENT HORS UTILISATION**

(30) Priorité: 21.12.2017 FR 1771408
(71) Demandeur: PP Sim, 87190 Magnac-Laval (FR)
(72) Inventeur: BOBET, Pierig, Bastien, 23300 LA SOUTERRAINE (FR); MACQUET, Pierre, 87190 MAGNAC-LAVAL (FR)
(74) Mandataire: Aquinov

(57) **Abrégé**

L'objet de l'invention est un simulateur de pilotage comportant un châssis, un siège et des interfaces homme-machine, et caractérisé en ce qu'il comporte des panneaux (30, 31, 32, 33) mobiles et/ou amovibles qui sont aptes à être associés au châssis pour former une boîte (3) fermée hors utilisation du simulateur logeant le siège et les interfaces. Le simulateur permet d'être rangé selon un faible encombrement hors utilisation.

## Description

L'invention concerne un simulateur de pilotage destiné à l'entraînement au pilotage d'un engin aéronautique ou terrestre ou bien même, destiné à la pratique de jeux-vidéos.

Un simulateur de pilotage comporte un châssis fixe ou parfois mobile en pivotement, un siège pour l'utilisateur, au moins un écran de visualisation et des interfaces homme-machine comprenant des accessoires de pilotage tels que pédale, manettes, volant, etc. et divers indicateurs de données.

De par la pluralité d'éléments le composant, son encombrement et son poids, un simulateur est fixe. Il s'étend en volume devant et latéralement à l'utilisateur. Il constitue un dispositif encombrant, pour lequel un emplacement idoine est généralement prévu afin de rester à demeure. Son déplacement est fastidieux, nécessitant le démontage des divers éléments, puis leur transport et enfin leur remontage.

L'invention a donc pour but de proposer un simulateur qui ne présente pas les inconvénients précités, en le rendant peu encombrant, et en permettant à un utilisateur de le ranger aisément si besoin, voire à le changer de place facilement et rapidement.

Selon l'invention, le simulateur de pilotage comporte un châssis, un siège et des interfaces homme-machine, et est caractérisé en ce qu'il comporte des panneaux mobiles et/ou amovibles qui sont aptes à être associés au châssis pour former une boîte fermée hors utilisation du simulateur et logeant le siège et les interfaces.

Le simulateur dans son état rangé forme une boîte fermée en logeant le siège et les interfaces.

Le simulateur dans son état d'utilisation est ouvert sur l'environnement extérieur.

Dans l'état fermé de la boîte, les panneaux forment des parois verticales aboutées pour constituer un contour fermé autour du châssis (sans aucune ouverture). Dans l'état ouvert de la boîte, les panneaux sont agencés pour constituer un contour totalement ouvert ou en partie ouvert autour du châssis.

Le siège logé dans la boîte est inaccessible à l'état fermé de la boîte. L'intérieur de la boîte à l'état fermé (donc à l'état rangé du simulateur) est inaccessible pour l'utilisateur.

L'intérieur de la boîte à l'état fermée (donc à l'état rangé du simulateur) est inaccessible du fait de la fermeture de l'ensemble des panneaux. L'intérieur de la boîte à l'état fermée (donc à l'état rangé du simulateur) est inaccessible du fait de la disposition des panneaux selon un contour fermé sans ouverture.

Les panneaux sont agencés par rapport au châssis en position d'utilisation du simulateur de manière à former un espace ouvert autour du siège.

En position d'utilisation, au moins certains panneaux, de préférence tous les panneaux, sont dans une position (ouverte) telle que procurant une boîte ouverte dotée d'un espace ouvert (sur l'environnement extérieur). L'espace ouvert autorise l'accès au siège pour l'utilisateur du simulateur.

Les panneaux peuvent être rigides ou souples.

Ainsi, le simulateur est apte à être facilement et rapidement rangé dans un espace réduit qui est constitué par une boîte. Il présente hors utilisation une forme compacte, diminuant considérablement son encombrement.

Selon une caractéristique, le simulateur comporte au moins une roulette pour la mobilité de la boîte hors utilisation du simulateur, permettant un transport aisé du simulateur de manière monobloc, ladite au moins une roulette étant apte à garantir la position statique et la stabilité du simulateur en position d'utilisation, en particulier ladite au moins une roulette étant amovible et/ou escamotable et/ou verrouillable en position de contact avec le sol. Le simulateur est ainsi facilement transportable.

Selon une autre caractéristique, le châssis comporte une partie inférieure, de préférence formant cadre, comportant au moins deux roulettes, de préférence quatre roulettes qui sont solidaires de la partie inférieure et escamotables pour passer d'une position en saillie vers l'extérieur du châssis (pour déplacer la boîte fermée) à une position rentrée vers l'espace intérieur du simulateur afin d'utiliser en toute sécurité le simulateur.

De préférence, le châssis comporte une plateforme sur laquelle est fixé le siège, la plateforme étant apte à être mise en mouvement (pour reproduire la simulation du mouvement que pourrait subir l'utilisateur lors du pilotage). Le siège peut être solidaire de la plateforme ou du châssis. Il peut être fixé de manière amovible ou non.

Dans un exemple particulier, la boîte présente une forme parallélépipédique, le simulateur comportant au moins quatre panneaux constituant quatre parois verticales de fermeture de la boîte. La boîte peut bien entendu présenter d'autres formes.

De préférence, la boîte dans son état fermé présente au moins une dimension dans un plan horizontal qui est inférieure à 73 cm.

Selon une autre caractéristique, les panneaux comportent des moyens d'assemblage permettant la fixation des panneaux (en position verticale) pour procurer la boîte fermée.

Dans un exemple de réalisation, le simulateur comporte en tant qu'interface au moins un écran de visualisation, en particulier trois écrans dont un écran central et deux écrans latéraux associés de manière mobile ou amovible à deux bords latéraux de l'écran central, de préférence au moins l'écran central étant mobile tel qu'en translation et/ou rotation pour passer d'une position rangée à une position d'utilisation, tandis que les écrans latéraux sont pivotables angulairement par rapport à l'écran central.

Le simulateur peut comporter un repose pieds qui est apte à recevoir une interface de simulation telle que des pédales, le repose pieds étant rangeable dans la boîte, de préférence en étant solidaire du châssis et dépliable/repliable et/ou mobile en translation et/ou en pivotement.

Dans la suite de la description, les termes « horizontal », « vertical », « supérieur », « inférieur », « haut », « bas », s'entendent en qualifiant des éléments du simulateur dans le cadre d'une installation normale du simulateur reposant de manière fixe parallèlement au sol.

La présente invention est maintenant décrite à l'aide d'exemples uniquement illustratifs et nullement limitatifs de la portée de l'invention, et à partir des illustrations ci-jointes, dans lesquelles :
- La figure 1 représente une vue en perspective du simulateur selon l'invention en position d'utilisation, la boîte de rangement hors utilisation étant dans son état ouvert ;
- La figure 2 est une vue de dessus de la figure 1 ;
- La figure 3 est une vue arrière de la figure 1 ;
- La figure 4 est une vue de côté de la figure 1,
- La figure 5 est une vue en perspective du simulateur hors utilisation et en cours de rangement, la boîte étant encore ouverte ;
- La figure 6 est une vue en perspective de la boîte de rangement du simulateur, la boîte étant fermée.

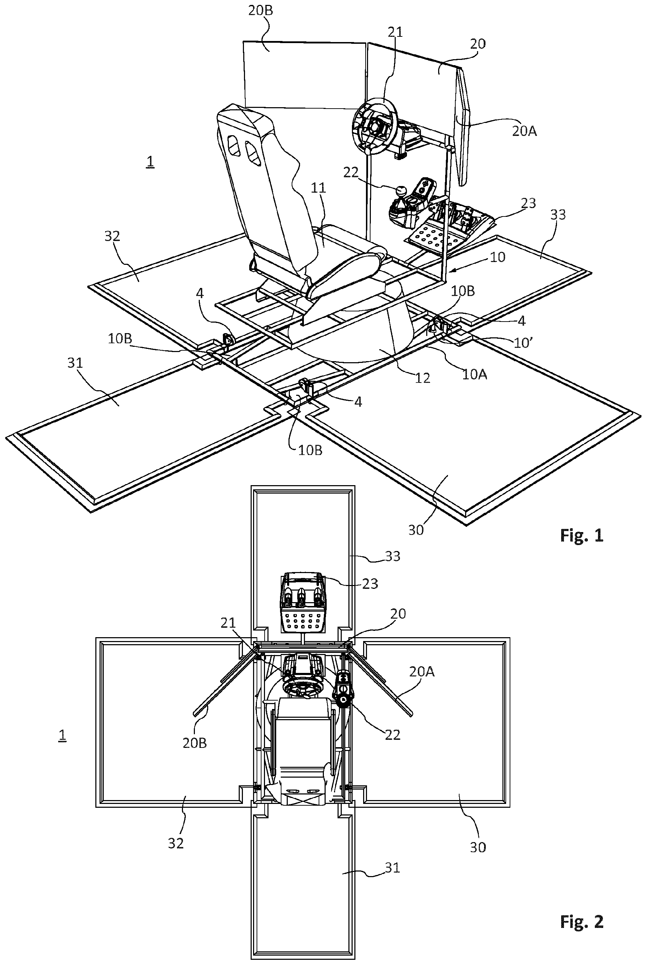

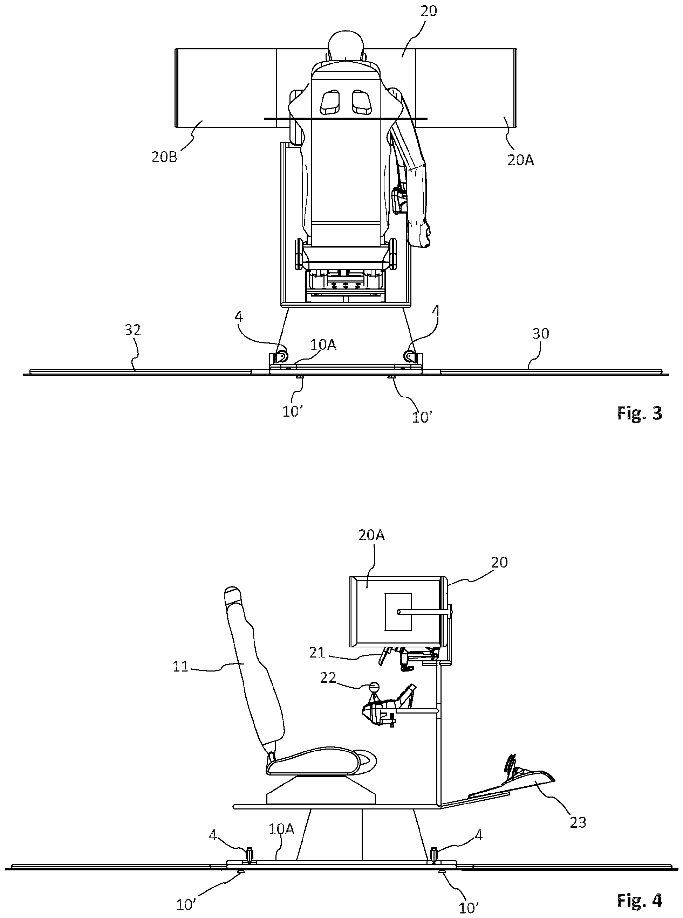

Le simulateur de pilotage 1 illustré sur les figures est selon l'invention conçu pour être aisément installé pour son utilisation et être tout aussi facilement rangé hors utilisation et de faible encombrement. En outre, il est avantageusement transportable et déplaçable. Selon l'invention, le simulateur 1 illustré sur les figures 1 à 5, comporte un châssis 10 dont la partie inférieure 10A est destinée à être horizontale et en appui au sol via des pieds 10', un siège 11 pour l'utilisateur, le siège étant monté de préférence sur une plateforme 12, elle-même fixée au châssis 10, et diverses interfaces homme-machine 20, 21..., adaptées au type de pilotage que propose le simulateur.

De plus, le simulateur 1 comporte selon l'invention des panneaux, dans l'exemple présenté ici quatre panneaux 30, 31, 32 et 33, qui sont associés au, et autour du châssis 10, le simulateur 1 étant disposé à l'intérieur des panneaux.

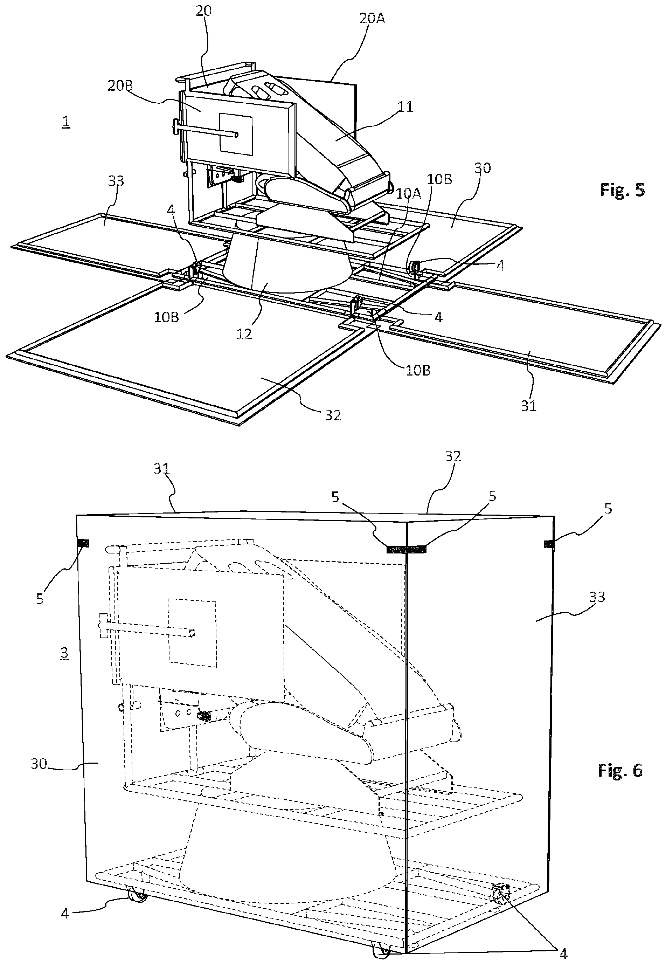

Les panneaux 30 à 33 sont destinés à former des panneaux de fermeture d'une boîte 3 illustrée dans son état fermé sur la figure 6, dans laquelle est aménagé et rangé le simulateur 1. Le châssis 10 permet ici d'une part de supporter le simulateur 1, et d'autre part d'associer les panneaux 30 à 33.

Le châssis 10 montré sur les figures est ici illustré avec une pluralité de tubes à titre d'exemple nullement limitatif. La forme et la constitution du châssis peuvent varier. Le châssis sera conçu avec le siège, l'éventuelle plateforme et les interfaces homme-machine, ainsi que les panneaux pour être de poids raisonnable afin que la boîte 3 puisse être aisément déplaçable.

Les panneaux 30 à 33 sont agencés de sorte à adopter :
- soit une position horizontale sur le sol telle qu'illustrée sur la figure 1 et dans un état déplié, pour ménager un espace totalement ouvert autour du simulateur 1 qui est alors prêt à l'utilisation ;
- soit une position verticale les uns par rapport aux autres, telle qu'illustrée sur la figure 6, et dans un état replié, pour constituer les parois de la boîte 3 dans son état fermé en formant un parallélépipède.

Les quatre panneaux 30 à 33 sont fixés aux quatre côtés du cadre du châssis 10. Ils sont dans le mode de réalisation présenté, fixé au châssis de manière mobile, par exemple par pivotement à l'aide de charnières disposées sur le bord inférieur de chaque panneau ; ils peuvent ainsi être aisément basculés d'une position verticale à une position horizontale et inversement. En variante, les panneaux peuvent être fixés de manière amovible par rapport au châssis et être démontés ou remontés en position verticale pour la fermeture de la boîte ; ce mode de réalisation est avantageux si l'utilisateur manque de place au sol empêchant la mise à plat au sol des panneaux.

En regard de la figure 6, les panneaux 30 à 33 comportent sur leur face externe des moyens d'assemblage 5 permettant en position verticale des panneaux de les maintenir entre eux, en particulier lesdits moyens coopérant avec deux panneaux adjacents. Les moyens d'assemblage 5 sont par exemple des fixations à grenouillère.

De plus, la boîte 3 en position fermée est déplaçable, via des roulettes 4. Avantageusement, les roulettes 4 sont fixées au châssis 10. Elles sont conçues pour être escamotables, entre une position hors transport du simulateur 1, pour laquelle elles sont agencées au-dessus du cadre du châssis 10 sans pouvoir toucher le sol, comme visible sur les figures 1 et 3 à 5, et une position de transport du simulateur 1, pour laquelle elles sont situées en-dessous du cadre du châssis et sont en contact avec le sol (figure 6). La face inférieure du simulateur 1, au niveau de la partie inférieure 10A du châssis 10 est totalement ouverte ou bien présente au moins des ouvertures 10B permettant le passage des roulettes 4 lors de leur escamotage. La boîte 3 présente de préférence une de ses dimensions horizontales qui est inférieure à 730 mm et une hauteur inférieure à 2000 mm, pour permettre de passer aisément dans un encadrement de porte qui est souvent de 730 mm de large. Les dimensions de la boîte 3 sur roulettes sont par exemple de 730 mm par 1200 mm dans un plan horizontal et de 1200 mm de haut.

Les interfaces homme-machine du simulateur peuvent être très diverses. A titre d'exemple d'interfaces, ont été illustrés, au moins un écran de visualisation 20, un volant 21, un joystick 22, et un repose pied 23 avec des pédales.

Le siège 11 est apte à être déplacé en hauteur et en profondeur par rapport aux interfaces telles que le volant 21 ; le siège est ainsi mobile en translation. En outre, le siège 11 peut être apte à être mis en mouvement par des actionneurs logés dans la plateforme 12 et commandable depuis une interface.

Le siège 11 est de préférence pliable (figure 5) pour être rabattu hors utilisation vers l'avant du simulateur afin de réduire la hauteur du siège et par conséquent la hauteur du simulateur, optimisant ainsi la hauteur de la boîte 3.

Dans l'exemple présenté du simulateur 1, celui-ci comporte trois écrans de visualisation, l'écran central 20 et deux écrans latéraux 20A et 20B qui sont avantageusement pivotables angulairement par rapport à l'écran central 20. Le pivotement des écrans latéraux permet d'être positionnés selon les angles souhaités pour l'utilisateur jusqu'à 180° par rapport à l'écran central pour former un seul écran plat. De plus, le pivotement des écrans leur permet d'être rabattus à 90° (figure 5) pour le rangement du simulateur dans la boîte 3 (figure 6).

Avantageusement, les écrans 20, 20A et 20B peuvent être translatés, via la translation du seul écran central 20, d'une position basse de rangement (figure 5) à une position haute d'utilisation (figures 1 à 4), et inversement.

## Revendications

1. Simulateur de pilotage (1) comportant un châssis (10), un siège (11) et des interfaces homme-machine (20, 21, 22, 23), **caractérisé en ce qu'**il comporte des panneaux (30, 31, 32, 33) mobiles et/ou amovibles qui sont aptes à être associés au châssis (10) pour former une boîte fermée (3) hors utilisation du simulateur et logeant le siège (11) et les interfaces (20, 21, 22, 23).

2. Simulateur selon la revendication 1, **caractérisé en ce que** les panneaux (30, 31, 32, 33) sont agencés par rapport au châssis en position d'utilisation du simulateur de manière à former un espace ouvert autour du siège

3. Simulateur selon la revendication 1 ou 2, **caractérisé en ce qu'**il comporte au moins une roulette (4) pour la mobilité de la boîte (3) hors utilisation du simulateur, ladite au moins une roulette étant apte à garantir la position statique et la stabilité du simulateur en position d'utilisation, en particulier ladite au moins une roulette étant amovible et/ou escamotable et/ou verrouillable en position de contact avec le sol.

4. Simulateur selon l'une quelconque des revendications précédentes, **caractérisé en ce que** le châssis (10) comporte une partie inférieure (10A), de préférence formant cadre, comportant au moins deux roulettes (4), de préférence quatre roulettes qui sont solidaires de la partie inférieure et escamotables pour passer d'une position en saillie vers l'extérieur du châssis à une position rentrée vers l'espace intérieur du simulateur.

5. Simulateur selon l'une quelconque des revendications précédentes, **caractérisé en ce que** le châssis (10) comporte une plateforme (12) sur laquelle est fixé le siège, la plateforme étant apte à être mise en mouvement.

6. Simulateur selon l'une quelconque des revendications précédentes, **caractérisé en ce que** la boîte (3) présente une forme parallélépipédique, le simulateur comportant au moins quatre panneaux (30, 31, 32, 33) constituant quatre parois verticales de fermeture de la boîte (3).

7. Simulateur selon l'une quelconque des revendications précédentes, **caractérisé en ce que** la boîte (3) dans son état fermé présente au moins une dimension dans un plan horizontal qui est inférieure à 73 cm.

8. Simulateur selon l'une quelconque des revendications précédentes, **caractérisé en ce que** les panneaux (30, 31, 32, 33) comportent des moyens d'assemblage (5) permettant la fixation des panneaux pour procurer la boîte (3) fermée.

9. Simulateur selon la revendication précédente, **caractérisé en ce que** les moyens d'assemblage (5) maintiennent en position verticale les panneaux entre eux, notamment lesdits moyens d'assemblage coopérant avec deux panneaux adjacents, en particulier les moyens d'assemblage (5) étant des fixations à grenouillère.

10. Simulateur selon l'une quelconque des revendications précédentes, **caractérisé en ce qu'**il comporte au moins un écran de visualisation (20), en particulier trois écrans dont un écran central (20) et deux écrans latéraux associés de manière mobile ou amovible à l'écran central, de préférence au moins l'écran central (20) étant mobile tel qu'en translation et/ou rotation pour passer d'une position rangée à une position d'utilisation, tandis que les écrans latéraux (20A, 20B) sont pivotables angulairement par rapport à l'écran central (20).

11. Simulateur selon l'une quelconque des revendications précédentes, **caractérisé en ce qu'**il comporte un repose pieds (23) qui est apte à recevoir une interface de simulation telle que des pédales, le repose pieds étant rangeable dans la boîte (3), de préférence en étant solidaire du châssis et dépliable/repliable et/ou mobile en translation et/ou en pivotement.
